# EUROPEAN PATENT SPECIFICATION

(11) **EP 2 905 571 B1**
(45) Date of publication and mention of the grant of the patent: **27.09.2017**
(21) Application number: 14154603.6
(22) Date of filing: 11.02.2014
(51) Int. Cl.: F41F 3/042, F41F 3/045

(54) **Casing with liquid dispenser**
Gehäuse mit Flüssigkeitsspender
Boîtier avec distributeur de liquide

(43) Date of publication of application: 12.08.2015
(73) Proprietor: Niceway Creation Limited, Chai Wan (HK)
(72) Inventor: Rocca, Tiziano, 81669 München (DE); Kapranov, Andrey, 82319 Starnberg (DE)
(74) Representative: Vossius & Partner Patentanwälte Rechtsanwälte mbB

(56) References cited:
- EP-A1- 1 679 670
- WO-A1-2006/042419
- DE-U1- 20 202 386
- DE-U1- 29 805 797
- DE-U1-202008 010 475
- DE-U1-202011 106 292
- US-A1- 2013 105 518
- "Pfefferspray als iPhone App", DWJ DEUTSCHES WAFFEN JOURNAL, DWJ VERLAGS, BLAUFELDEN, DE, vol. 47, no. 5, 1 May 2011 (2011-05-01), page 52, XP001561208, ISSN: 0341-8936

## Description

The present invention relates to a casing for a mobile electronic device, the casing comprising a liquid or fluid dispenser.

As described in WO 2013/020591 A1 and DE 20 2011 106 292 U1, there is often a need to have small amounts of specific liquids and/or fluids handy. Such liquids and/or fluids may comprise fragrances and perfumes, deodorants, disinfectants such as hand sanitizers, insect repellents, aftershaves, bad breath or dry mouth remedies, facial tonics, CS gas and OC sprays (also known as pepper sprays) and liquid nicotine. In order to have such liquids available during everyday life without being forced to carry additional items along, WO 2013/020591 A1 and DE 20 2011 106 292 U1 propose a casing attachment for a mobile electronic device comprising mounting means for its mounting onto the casing of a mobile electronic device as well as an atomizing unit having atomizing means and a liquid container for atomizing liquid. This allows for having the mostly required liquids at hand every time and everywhere in the same way as the permanent companions of the daily life such as mobile phones or other mobile electronic devices.

It is further known to equip a cell phone with pepper spray (see, e.g., US 2013/0105518 A1 and DE 20 2008 010 475 U1).

The casing attachment known from WO 2013/020591 A1 and DE 20 2011 106 292 U1 may, however, have the potential disadvantage that the atomizing unit thereof may automatically dispense liquid from the liquid container while the mobile phone is carried, e.g., in a bag. Depending on the type of liquid being dispensed, this may cause anything between annoyance and serious danger to the user.
It is therefore an object of the present invention to provide an improved casing for a mobile electronic device which avoids or at least alleviates said problem. This object is achieved with a casing according to claim 1. Further objects solved by the present invention will be evident from the below discussion of preferred features.

The present invention, inter alia, relates to a casing for a mobile electronic device, such as a mobile phone, a smart phone, a tablet PC, an MP3 player or the like. The casing comprises a liquid or fluid dispenser having a spraying unit and a reservoir. The dispenser can be moved from a secure position to at least one dispensing position, wherein the dispenser can be rotated from the secure position to the at least one dispensing position and wherein the dispenser can be rotated by at least 90°.

The term "secure position" is understood in the context of the present invention to refer to a position and/or orientation of the dispenser in which an inadvertent dispensing from the reservoir is prevented or at least hindered or impeded. This may be achieved in different ways. For example, an actuator of the spraying unit may not be accessible and/or locked in said secure position. Alternatively or in addition, a nozzle of the spraying unit may be covered or blocked in the secure position.

The term "dispensing position" is understood in the context of the present invention to refer to a position and/or orientation of the dispenser which allows a user to dispense liquid or fluid from the reservoir, e.g., by pushing a release button or activating a mechanical pumping mechanism.

The casing may, in general, comprise any suitable material which does not interfere with the electromagnetic fields of the electronic mobile device such as plastics, wood, carbon fiber, casting crystals, glass and/or aluminum. It is, however, preferred that the casing comprises plastics such as ABS, PC, PP, PCTA, PMMA, composites, etc. The part of the casing without the dispenser (also referred to as casing portion) may also comprise any suitable material which does not interfere with the electromagnetic fields of the electronic mobile device such as plastics, wood, carbon fiber, casting crystals, glass and/or aluminium. It is, however, preferred that the casing portion is moulded, preferably injection moulded, and/or made from one or a combination of the following materials ABS, PC, PP, PCTA, PMMA, carbon fiber, polycarbonates, wood, aluminium, leather, fabrics, etc. While the casing portion and the dispenser may be made of the same material, the material of the dispenser may in preferred embodiments also differ from the material of the remaining casing. For example, the dispenser and in particular the reservoir may also comprise certain materials such as glass which are particularly suitable to contain a fragrance or the like. The dispenser or a portion thereof may also be transparent whereas the remaining casing may be nontransparent.

The spraying unit may comprise any type of spraying unit known in the prior art such as spraying units based on mechanical pumping or aerosol spraying units which are based on a propellant which is contained within the reservoir under pressure and which expands or evaporates rapidly thereby dispensing a liquid within the reservoir as an aerosol. The reservoir may be made from any material suitable to contain the liquid or fluid to be dispensed over a certain amount of time. Preferred materials for the reservoir are the following materials: ABS, PC, PP, PCTA, PMMA, carbon fiber, polycarbonates, or composites.

The casing for the electronic mobile device is preferably adapted to be releasably connected to the mobile electronic device. For this purpose, the casing preferably comprises one or more mounting elements for releasably mounting the casing to the mobile electronic device. Preferably, the casing comprises several snap-fit elements which are adapted to releasably engage with edges and/or corners of the mobile electronic device.

Preferably, the casing or at least the mounting elements is/are elastic to allow for such a snap-fit connection. Preferably, the dispenser is adapted to be operated mechanically. A mechanical operation of the dispenser is understood in the context of the present invention as an operation initiated and/or controlled by a mechanical actuation using a finger or thumb of a user. For example, the dispenser may be operated by pressing or pushing an actuation button which controls a relief valve. Preferably, the spraying unit is adapted to be operated by a mechanical pumping. In other words, the spraying unit preferably comprises a mechanism which allows to manually increase the pressure within the reservoir by means of a manual pump in order to dispense the liquid in the form of small droplets or as an aerosol. While a spraying unit is particularly suitable for the use of perfumes and fragrances, other dispensers and/or spraying units may be preferable for dispensing other liquids or fluids. For example, an aerosol operated dispenser may be particularly preferably for dispensing pepper spray, deodorants and, e.g., liquid nicotine (such as the Nicorette Spray).

The dispenser can preferably be released from and re-attached to the casing. Preferably, releasing the dispenser from the casing and re-attaching it to the casing may be achieved without using a specific tool, i.e., by a simple mechanical connection. Preferably, the dispenser and the casing can be releasably connected to each other by a snap-fit. However, other means for mechanically connecting the dispenser to the casing are envisaged as well such as a friction fit, a bayonet coupling, strap closures, adhesive surfaces by means of glues or magnets, pressure points, etc. In any case, the connection provided between the dispenser and the casing needs to allow for movability of the dispenser from the secure position to the dispensing position when connected to the casing. Preferably, the dispenser is a stand-alone dispenser adapted to be operated when released from the casing. In other words, when the dispenser is released from the casing, the dispenser and its spraying unit is generally ready to be operated by a user. Thus, the user may use the dispenser together with the casing (and the corresponding electronic mobile device) or as a separate dispenser as needed.

The spraying unit preferably has an actuator such as a push button, a lever or the like. The actuator is preferably not accessible and/or locked in the secure position of the dispenser. In other words, said actuator is preferably covered and/or concealed when the dispenser is in the secure position and only uncovered and accessible once the dispenser is moved into the or one of the dispensing position (s). Alternatively or in addition, the actuator of the spraying unit may be locked in the secure position such that it cannot be operated by a user. It is preferred that the actuator is locked or blocked automatically when the dispenser is moved into the secure position.

Preferably, the dispenser and/or the casing has means to secure and/or lock the dispenser in the secure position. Thus, it may be avoided that the dispenser is inadvertently moved into a dispensing position when, e.g., carried around within a bag. For example, the dispenser may snap into the secure position and/or an increased friction might have to be overcome when moving the dispenser out of the secure position. According to one embodiment, it may be sufficient to apply an increased amount of force (e.g., to overcome the friction) in order to move the dispenser from the secure position to a dispensing position. According to another embodiment, the user may have to press a release button or perform a specific movement of the dispenser in order to move it out of the secure position into a dispensing position. A similar or another means may be provided at the dispenser and/or the casing in order to secure and/or lock the dispenser in one or more dispensing positions. This may help to stabilize the dispenser in its dispensing position which allows for a controlled dispensing of liquid or fluid.

According to one preferred embodiment, the reservoir is an integral part of the dispenser. In its most simple version, said reservoir is not refillable and may be used only once. In other words, the reservoir is not refillable by end consumers and requires an industry filler for loading the reservoir with a liquid or fluid. It is, however, preferred that the reservoir is refillable. For this purpose, a specific refill valve may be provided in the dispenser, which is in fluid connection with the reservoir. Preferably, refilling may be performed through the outlet of the reservoir which connects to the spraying unit. In this case, refilling may either be performed through the spraying unit or a part thereof or by removing the spraying unit in order to directly access the opening or outlet of the reservoir. It is also preferred to provide a specific refill valve at a portion other than the outlet of the reservoir, e.g. at the side of the dispenser opposite to the spraying unit or at a lateral side of the dispenser. Preferably, refilling may be achieved without requiring the consumer to remove parts such as the spraying unit.

According to another preferred embodiment, the reservoir and the remaining dispenser are not integral with each other, but consist of separate parts, which may be connected to each other. Preferably, the reservoir can no longer be detached from the dispenser once attached or fixed to the dispenser. In this case, the reservoir may be non-refillable or refillable as described above. Alternatively, the reservoir may be releasably connected to or inserted into the dispenser. In this case, it is particularly preferred that the reservoir is non-refillable, because refilling of the dispenser can in this case be performed by replacing an empty reservoir with a new full reservoir.

The casing is preferably adapted for releasably attaching the casing to the mobile electronic device. For this purpose, the casing preferably comprises one or more mounting elements as described above. Preferably, at least one side of the casing has a surface, which is curved in two dimensions, for biasing and/or stabilizing the mobile electronic device in a preferred position when attached to the mobile electronic device. Thus, the mobile electronic device together the inventive casing is automatically moved into a position and/or orientation which allows, e.g., easy access to a display of said device.

Preferably, the casing comprises a guiding groove or notch for guiding the movement of the dispenser from its secure position to its dispensing position. This guiding groove or notch stabilizes the dispenser once attached to the casing and preferably prevents an inadvertent detachment of the dispenser from the casing, e.g., during movement of the dispenser.

The spraying unit preferably comprises a nozzle, a resilient element and an actuator for actuating the nozzle, wherein the resilient element is adapted to provide a restoring force to the actuator. The spraying unit basically works as any commercial atomizer following the Bernoullis' principle, wherein an air flow is injected together with a liquid in smaller chambers or passages where the speed and the decreasing space cause the generation of liquid pressure drops at the narrowest point. Different mechanisms, i.e. double vs. single chamber, can be used to increase liquid consumption efficiency and desired particles density.

The movement of the dispenser from a secure position to at least one dispensing position comprises a rotation of the dispenser. In other words, the dispenser can be rotated from the secure position to the at least one dispensing position. The casing has a length, a width and a height and the axis of rotation is preferably perpendicular to the length and width of the casing. This allows for a large movement of the dispenser without changing the shape of the entire casing considerably. Preferably, the dispenser comprises a stop for preventing rotation by more than a predetermined maximum angle. Said maximum angle is preferably smaller than 270° and preferably about 180°. One example for such stop is a bolt, pin or protrusion provided at the dispenser which engages with a circular or semi-circular groove provided in the casing. During rotation from the secure position to the at least one dispensing position, the bolt, pin or protrusion moves along and within said circular or semi-circular groove. Yet, once the maximum angle has been reached, the bolt, pin or protrusion reaches and abuts an end of said groove and thus prevents further rotation of the dispenser with respect to the casing. Preferably, said groove provides an increased friction when moving the dispenser out of the secure position and/or out of the dispensing position.

Preferably, the dispenser and the casing can be releasably connected to each other by a snap-fit, wherein the dispenser can be rotated around said snap-fit. For example, either of the dispenser and the casing can comprise a circular recess with an undercut and the other of the dispenser and the casing can comprise a corresponding circular or semi-circular protrusion which engages with the undercut of the recess to provide a snap-fit connection which allows for rotation of the dispenser with respect to the casing. Alternatively, either of the dispenser and the casing can comprise a circular through hole and the other of the dispenser and the casing can comprise a corresponding circular or semi-circular protrusion with an undercut which engages with the edge of the through hole to provide a snap-fit connection which allows for rotation of the dispenser with respect to the casing. These are particular advantageous solutions, because the connection of the dispenser with the casing on the one hand and the rotatability on the other hand are provided with one and the same technical means. In order to provide a stable and reliable connection as well as a smooth rotation, it is preferred that the diameter of said snap-fit connector is between 5 mm and 20 mm, preferably between 7 mm and 15 mm and more preferably between 9 mm and 12 mm.

Preferably, the dispenser can be rotated by about 180°. It is preferred that the dispenser can be rotated from its secure position only in one direction, i.e., either clockwise or counterclockwise. The direction of rotation may be defined, e.g., by the position of the above-mentioned groove and pin.

Furthermore, a dispenser is described, the dispenser comprising a fluid reservoir and a spraying unit including a nozzle. The dispenser comprises a connector adapted for releasably connecting the dispenser to a casing for a mobile electronic device. The dispenser can be operated manually to mechanically pump a fluid from the fluid reservoir to the nozzle and to dispense said fluid through the nozzle. The dispenser is a stand-alone dispenser adapted to be operated when released from the casing.

The dispenser preferably has an opening or hole adapted for attaching the dispenser to a keyring. This allows for easily carrying around the dispenser when used as a stand-alone dispenser. Moreover, the dispenser may also be used as a replacement dispenser for the casing of the present invention. Such a replacement dispenser may then easily be carried along attached to a keyring.

The dispenser preferably has a transparent portion. The transparent portion preferably comprises an inspection window and/or an optical lens.

The opening or hole or the transparent portion preferably has a cross-sectional area of at least 50 mm², more preferably of at least 75 mm², even more preferably of at least 100 mm² and most preferably 150 mm². Thus, the opening or hole or the transparent portion may be placed in front of a camera of the mobile electronic device once the dispenser is connected to a casing and the casing is connected to a mobile electronic device. According to one preferred embodiment, the opening or hole or the transparent portion is situated in front of the camera of the mobile electronic device only if the dispenser is in the secure position. According to another preferred embodiment, the dispenser comprises an opening, hole or transparent portion on the one hand and a lens on the other hand, wherein the opening, hole or transparent portion is situated in front of the camera when the dispenser is in the secure position and the lens is situated in front of the camera when the dispenser is situated in the dispensing position. Thus, the rotation of the dispenser may not only be used for dispensing a liquid from the dispenser, but also for providing additional optics to the camera of the electronic mobile device.

Preferably, the connector for releasably connecting the dispenser to the casing for a mobile device comprises the male or female portion of a snap-fit connector, a friction fit connector, a bayonet coupling or the like. In a particularly preferred embodiment, the connector is the male or female portion of a circular or semi-circular snap-fit such as a ring-shaped snap joint. For example, the connector of the dispenser may comprise a circular recess with an undercut which is adapted to engage with the corresponding circular protrusion of the casing. Alternatively, the connector may comprise a circular or semi-circular protrusion having a protruding edge which is adapted to engage with an undercut of a circular recess or a through hole provided in the casing. Preferably, said protrusion is a ring-shaped protrusion. The ring preferably has an outer diameter of between 5 mm and 20 mm, preferably between 7 mm and 15 mm and more preferably between 9 mm and 12 mm. The ring-shaped protrusion preferably has a thickness of at least 0.2 mm, more preferably of at least 0.5 mm and most preferably of at least 0.8 mm.

The dispenser preferably further comprises a pin adapted to engage with a groove or a notch in the casing. The pin and the connector are preferably provided on the same side of the dispenser.

Preferably, the dispenser comprises a locking element for securing and/or locking the spraying unit of the dispenser. The dispenser preferably comprises an actuator for operating the spraying unit and a resilient element, wherein the resilient element is adapted to provide a restoring force to the actuator.

At least one side of the dispenser preferably has a surface which is curved in two dimensions. Said curved surface is preferably opposite to the surface which comprises the connector.

Even though it is preferred that the dispenser can be operated manually to mechanically pump a fluid from the fluid reservoir to the nozzle and to dispense said fluid through the nozzle, the present invention also covers a dispenser comprising a fluid reservoir and a spraying unit including a nozzle, wherein the dispenser comprises a connector adapted for releasably connecting the dispenser to a casing for a mobile device, wherein the dispenser is a stand-alone dispenser adapted to be operated when released from the casing. The spraying unit of said dispenser can be based on any known mechanism used for dispensing a liquid or fluid from a reservoir through a nozzle known in the prior art. In particular, said spraying unit may be based on an aerosol spray technology. All features described above as preferred for the dispenser which can be operated manually may preferably also be employed in the dispenser with any other type of spraying unit.

The fluid reservoir of the dispenser preferably comprises one or a combination of the following fluids: fragrances, perfumes, deodorants, disinfectants such as hand sanitizers, insect repellents, aftershaves, bad breath or dry mouth remedies, visage refreshment water, OC spray (also known as pepper spray), liquid nicotine (such as in the Nicorette Spray).

The present invention further relates to a kit comprising a casing for a mobile electronic device and a dispenser as described above, wherein the casing is adapted to receive the dispenser.

The present invention further relates to the use of the above described casing and/or the above described dispenser for applying one or more of the following fluids onto the body of a user: fragrances, perfumes, deodorants, disinfectants such as hand sanitizers, insect repellents, aftershaves, visage refreshment water. The present invention further relates to the use of the above described casing and/or the above described dispenser for introducing one or more of the following fluids into the stoma and/or respiratory ducts of a user: bad breath remedies, dry mouth remedies and liquid nicotine. The present invention further relates to the use of the above described casing and/or the above described dispenser for spraying a potential attacker with OC spray during self-defence.

Preferred embodiments of the present invention are further elucidated below with reference to the following Figures.
- Fig. 1: shows a perspective front view of the separate parts of a preferred embodiment of the inventive casing;
- Fig. 2: shows a perspective back view of the embodiment shown in Figure 1 with the dispenser being assembled;
- Fig. 3: shows a perspective front view of the embodiment shown in Figure 2;
- Fig. 4: shows a perspective front view of the embodiment shown in Figure 2 with the dispenser being ready to be attached to the casing;
- Fig. 5: shows a perspective front view with the dispenser being attached to the casing and rotated about 90° from its secure position;
- Fig. 6: shows a perspective front view of the embodiment shown in Figure 2 with the dispenser in the secure position;
- Fig. 7: shows a perspective back view of the embodiment shown in Figure 2 in combination with an electronic mobile device;
- Fig. 8: shows the casing of Figure 7 being attached to the electronic mobile device;
- Fig. 9: shows a front view of the casing being attached to the electronic mobile device with the dispenser in the dispensing position; and
- Fig. 10: shows the casing and the mobile electronic device of Figure 8 while the dispenser is being operated.

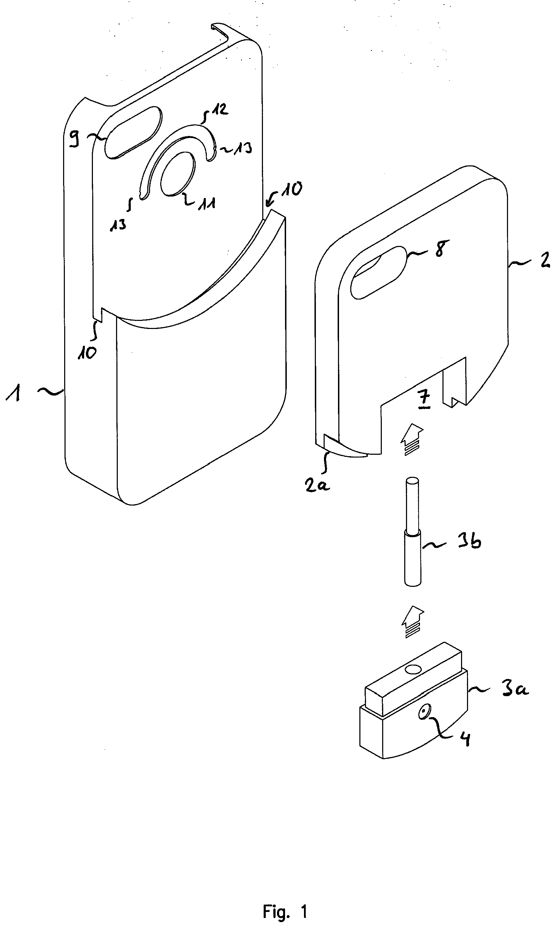

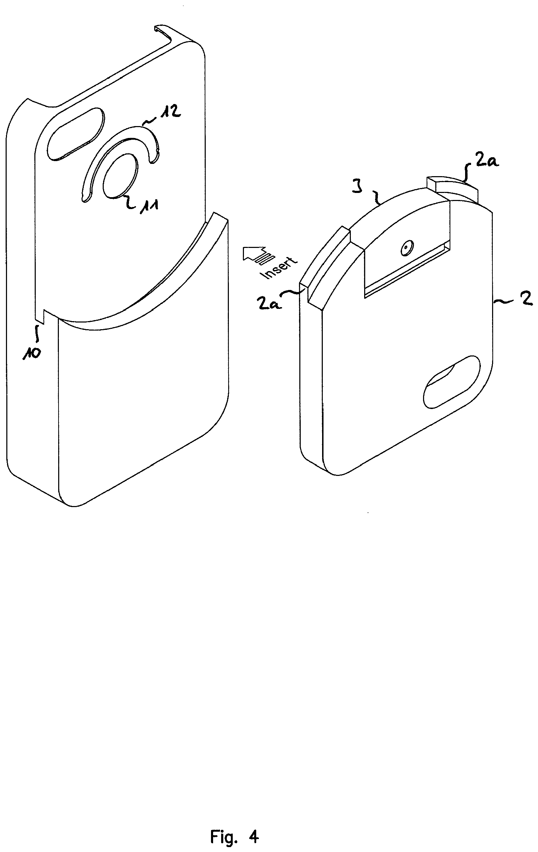

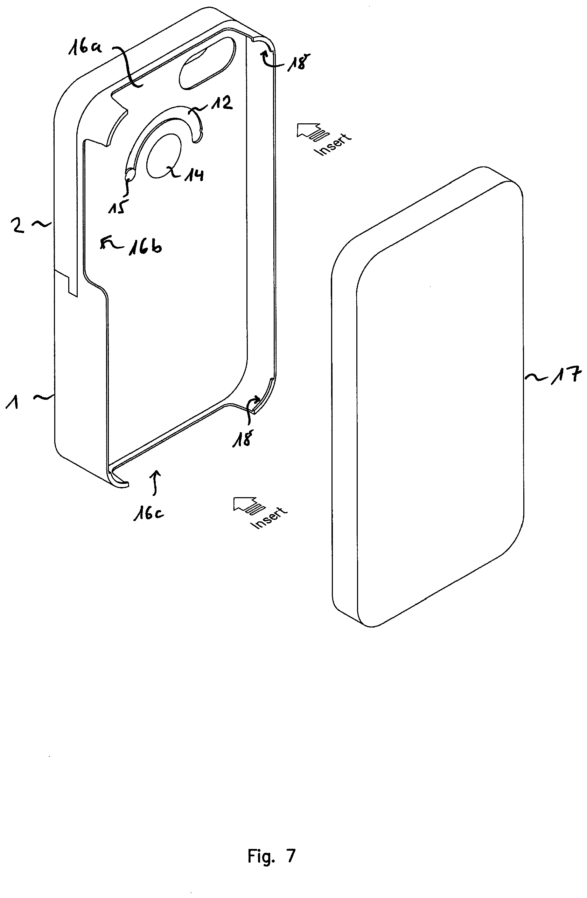

Figures 1-10 show a preferred embodiment of a casing 1 for a mobile electronic device 17, the mobile electronic device 17 being shown in Figures 7-10 only. The person skilled in the art will readily understand that the specific shape of the embodiment shown is adapted to the specific mobile electronic device 17 shown in the Figures and that the scope of the present invention is not limited to that specific example.

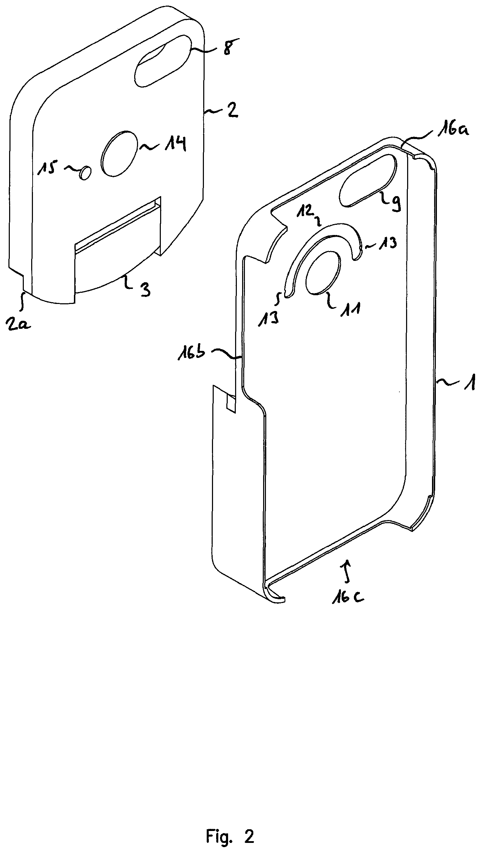

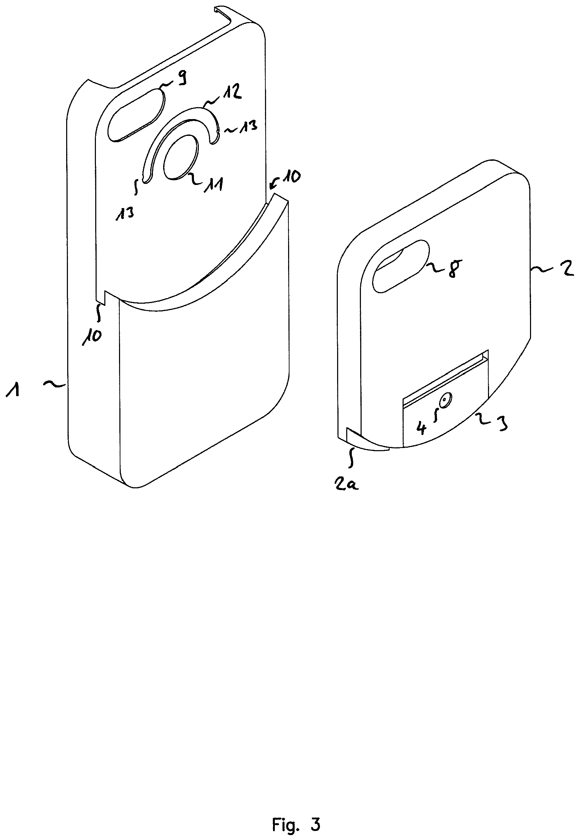

Figure 1 shows the various components of the preferred embodiment in a perspective front view. The casing comprises a casing portion 1 which is adapted for releasably attaching the casing to the mobile electronic device 17 and a dispenser 2. The dispenser comprises a spraying unit 3 and a reservoir (not shown in the Figures). The spraying unit comprises an actuator 3a and a fluid connector 3b, which connects the reservoir with the nozzle 4. The spraying unit 3 is adapted to be mounted in a corresponding receiving portion or recess 7 of the dispenser 2. The dispenser is shown in its assembled state in Figures 2 and 3. As will be evident to the skilled person, the actuator 3a of the spraying unit 3 may be pushed upwards in Figure 3 in order to dispense fluid provided in the reservoir through the nozzle 4. Even though a very specific spraying unit is shown in Figure 1, the person skilled in the art will readily understand that the present invention is not at all limited to the specific type of spraying unit or even a mechanical spraying unit in general. Rather, any type of spraying unit known in the prior art may be utilized in the context of the present invention. This in particular includes aerosol-based spraying units which are based on a pressurized reservoir comprising a propellant (gas) which ejects a fluid provided in the reservoir if a relief valve is opened by pressing a button or the like.

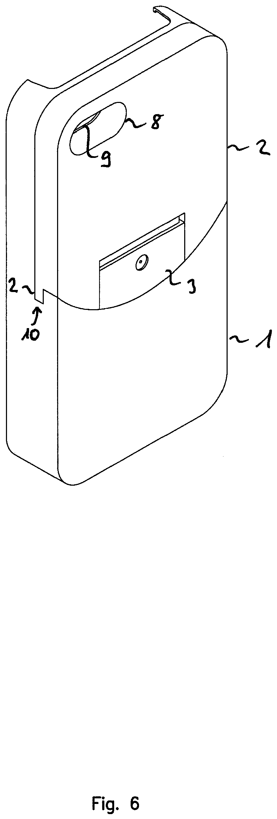

The dispenser 2 comprises an opening or hole 8 which corresponds with a respective opening or hole 9 in the casing portion 1. As may be seen, e.g., in Figure 6, the two holes or openings 8 and 9 are arranged on top of each other once the dispenser is in its secure position or orientation. These holes or openings 8 and 9 are situated such that a camera provided in the mobile electronic device may function normally once the casing is attached to the mobile electronic device. The shape and size of these holes or openings is preferably adjusted to the shape and size as well as the field of view of the camera of the mobile electronic device.

The dispenser of the present invention can preferably be releasably attached to the casing and thus be used in combination with the casing and as a stand-alone dispenser adapted to be operated when released from the casing. In the preferred embodiment shown in the Figures, the dispenser 2 and the casing 1 can be releasably connected to each other by a circular snap joint 11, 14 shown in Figure 2. The circular snap joint comprises a circular through hole 11 in the casing portion 1 of the casing (see Figures 2 and 3) and a circular protrusion 14 (see Figure 2) having an undercut which is adapted to engage with the edge of the through hole 11. Thus, the dispenser 2 may be releasably attached to the casing portion 1 by pressing the circular protrusion 14 through the through hole 11 to achieve a snap-fit. For this purpose, it is preferred that the material of the circular protrusion 14 is elastic to allow for repeated releasing and reattaching of the dispenser to the casing. Of course, the circular protrusion 14 may be replace by a ring-shaped protrusion 14, said protruding ring comprising an undercut for engagement with the circular through hole 11.

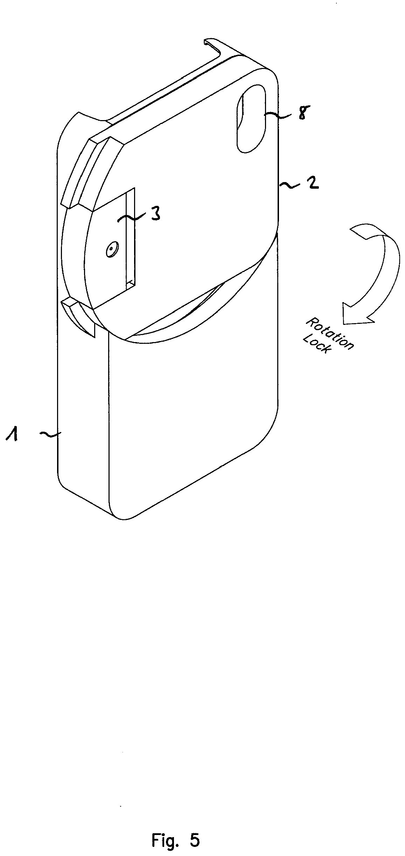

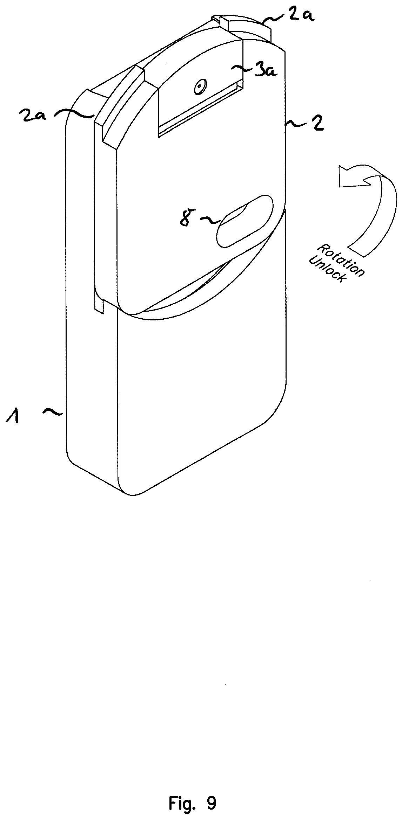

The use of a circular or ring-shaped snap joint not only provides a convenient releasable connection between the dispenser and the casing, but also allows for rotation of the dispenser 2 with respect to the casing (see Figures 5 and 6). Said rotation is further guided and stabilized by means of a guiding groove 10 provided in the casing which engages with the edges and/or corners 2a during rotation of the dispenser 2. While the shown embodiment only comprises two such edges 2a on the side comprising the spraying unit 3, an additional protrusion or edge may be provided at the opposite side of the dispenser 2 in order to engage with the guiding groove in the position shown in Figure 9. Alternatively, said opposite side of the dispenser may be sufficiently thin so as to allow the corners of the dispenser to engage with the guiding groove 10. Once attached to the casing 1, the dispenser 2 may preferably be rotated about 180° in total as shown in the sequence of Figures 6, 5 and 9.

The rotational movement is further stabilized and/or guided by a combination of a pin or bolt 15 provided on the same side/surface of the dispenser 2 as the circular or ring-shaped protrusion 14 (see Figure 2) and a semi-circular groove or notch 12 which, in this embodiment, extends entirely through the thickness of the casing 1 (see Figures 2 and 3). During rotation of the dispenser 2 with respect to the casing 1, the pin 15 of the dispenser 2 moves along the groove 12 and thus further stabilizes and guides the rotation. More importantly, the combination of pin 15 and groove 12 provides a stop for the rotational movement once the pin 15 abuts either of the two ends of the groove 12. This ensures a maximum angle of rotation of 180° in the shown example. In other words, the dispenser can be moved from its secure position shown in Figure 6 by rotation of 180° to its dispensing position shown in Figure 9. In both the secure position and the dispensing position, the pin 15 of the dispenser 2 abuts either of the two ends of the groove 12. The dispenser is secured in both these position due to slight protrusions 13 provided in the groove 12 (see Figures 2 and 3). These protrusions 13 increase the friction when the user tries to move the dispenser 2 away from either the secure or the dispensing position. Accordingly, an inadvertent movement of the dispenser may be prevented.

Providing movement from a secure position to a dispensing position by means of rotation only is particularly advantageous, because it allows for a space efficient transformation from one state to the other without changing the appearance of the entire device substantially. Moreover, there is less likelihood that the dispenser be inadvertently rotated in the correct direction rather than simply moved translationally. As shown in Figure 6, rotation of the entire dispenser allows for simply blocking access to the actuator 3a of the spraying unit 3. The particularly preferred use of a ring-shaped snap joint or any other circular releasable connector provides for a synergistic effect, because two functions may be provided with one and the same element, namely releasably attaching the dispenser to the casing on the one hand and allowing for rotation of the dispenser with respect to the casing on the other hand.

However, the present invention is not limited to the specific features shown in the Figures. The pin 15 and groove 12 are optional and the mechanical connection between casing and dispenser may be provided by any other releasable connection means. Similarly, the groove 10 and the specific shape of the dispenser 2 are optional features. Other embodiments may allow for more or less rotation than 180° and the dispensing position need not necessarily be that shown in Figure 9, but could also be provided in the position shown in Figure 5. Finally, the change from secure position to dispensing position need not be performed by means of rotation, but may also be achieved by a simple translation or a combination of translation and rotation.

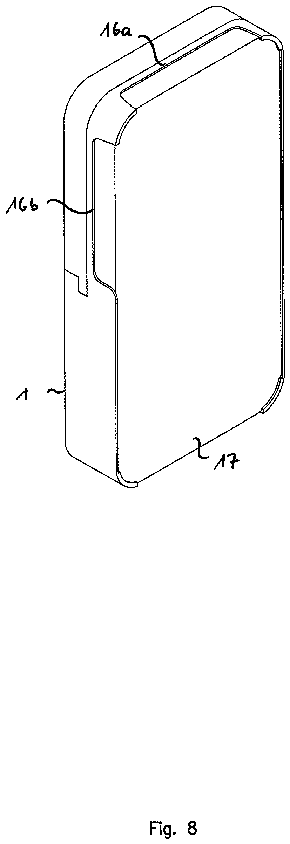

The casing 1 is adapted to be releasably attached to a mobile electronic device 17 (see Figures 7 and 8). In the embodiment shown in the Figures, said releasable mechanical connection may be achieved by means of an edge of the casing which comprises an undercut 18 (see Figure 7) which is adapted to snap onto or around the edges of the mobile electronic device 17 as shown in Figure 8. While the preferred embodiment shown in the Figures comprises such an undercut at each of the four corners of the casing 1, such mounting elements or undercuts 18 may also be provided, e.g., along substantially the entire edge of the casing 1 except of three recesses 16a, 16b and 16c (see Figure 2), which are provided to allow access to certain buttons of the electronic mobile device 17 (not shown). In order to allow for the casing to releasably snap onto the mobile electronic device 17 as shown in Figures 7 and 8, it is preferred that the material of the casing 1 or at least the edges thereof is/are elastic.

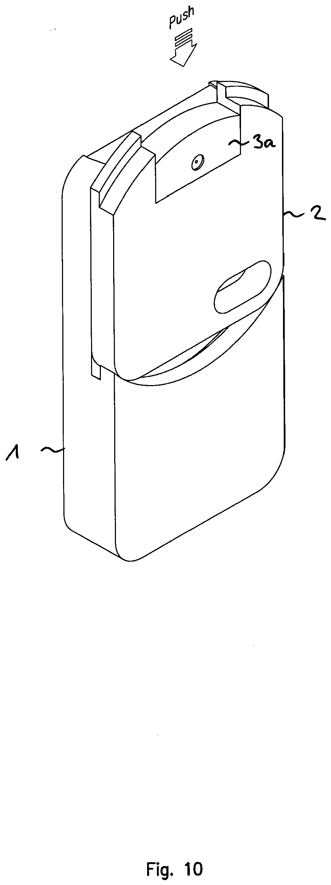

Once the dispenser 2 is attached to the casing 1 and the casing 1 is attached to the mobile electronic device 17, the dispenser 2 may be rotated around 180° into its dispensing position as shown in Figure 9 and fluid may be ejected from the nozzle 4 of the spraying unit 3 by pushing the actuator 3a of the spraying unit 3 as indicated in Figure 10.

## Claims

1. Casing (1) for a mobile electronic device (17), the casing (1) comprising a dispenser (2), which comprises a spraying unit (3) and a reservoir, wherein the dispenser (2) can be moved from a secure position to at least one dispensing position, **characterised in that** the dispenser (2) can be rotated from the secure position to the at least one dispensing position, wherein the dispenser (2) can be rotated by at least 90°.

2. Casing according to claim 1, wherein the dispenser (2) is adapted to be operated mechanically and wherein the spraying unit (3) can preferably be operated by mechanical pumping.

3. Casing according to any of the previous claims, wherein the dispenser (2) can be released from and re-attached to the casing (1) and wherein the dispenser (2) is preferably a stand-alone dispenser adapted to be operated when released from the casing (1).

4. Casing according to any of the previous claims, wherein the dispenser (2) and the casing (1) are releasably connected to each other by a snap-fit.

5. Casing according to any of the previous claims, wherein the spraying unit (3) has an actuator (3a) which is not accessible and/or locked in the secure position.

6. Casing according to any of the previous claims, wherein the dispenser (2) and/or the casing (1) has means to secure and/or lock the dispenser (2) in the secure position.

7. Casing according to any of the previous claims, wherein the casing (1) and/or dispenser (2) comprises a stop (12, 15) for preventing rotation by more than a predetermined maximum angle.

8. Casing according to claim 1, wherein the dispenser (2) and the casing (1) can be releasably connected to each other by a snap-fit (11, 14) and wherein the dispenser (2) can be rotated around said snap-fit (11, 14).

9. Casing according to claim 1, wherein the dispenser (2) can be rotated by about 180°.

## Patentansprüche

1. Verkleidung (1) für ein mobiles elektronisches Gerät (17), wobei die Verkleidung (1) einen Spender (2) mit einer Sprüheinheit (3) und einem Reservoir aufweist und wobei der Spender (2) aus einer gesicherten Position in mindestens eine Ausgabeposition bewegt werden kann, **dadurch gekennzeichnet, dass** der Spender (2) aus der gesicherten Position in die mindestens eine Ausgabeposition gedreht werden kann, wobei der Spender (2) um mindestens 90° gedreht werden kann.

2. Verkleidung nach Anspruch 1, wobei der Spender (2) zur mechanischen Betätigung geeignet ist und wobei die Sprüheinheit (3) vorzugsweise durch mechanisches Pumpen betätigt werden kann.

3. Verkleidung nach einem der vorstehenden Ansprüche, wobei der Spender (2) von der Verkleidung (1) gelöst und wieder daran angebracht werden kann und wobei der Spender (2) vorzugsweise ein eigenständiger Spender ist, der auch getrennt von der Verkleidung (1) betätigt werden kann.

4. Verkleidung nach einem der vorstehenden Ansprüche, wobei der Spender (2) und die Verkleidung (1) durch eine Schnappverbindung lösbar miteinander verbunden sind.

5. Verkleidung nach einem der vorstehenden Ansprüche, wobei die Sprüheinheit (3) einen Auslöser (3a) aufweist, der in der gesicherten Position nicht zugänglich und/oder verriegelt ist.

6. Verkleidung nach einem der vorstehenden Ansprüche, wobei der Spender (2) und/oder die Verkleidung (1) eine Einrichtung zur Sicherung und/oder Verriegelung des Spenders (2) in der gesicherten Position aufweist.

7. Verkleidung nach einem der vorstehenden Ansprüche, wobei die Verkleidung (1) und/oder der Spender (2) vorzugsweise einen Anschlag (12, 15) aufweist, um eine Drehung über einen vorgegebenen Maximalwinkel hinaus zu verhindern.

8. Verkleidung nach Anspruch 1, wobei der Spender (2) und die Verkleidung (1) durch eine Schnappverbindung (11, 14) lösbar miteinander verbunden werden können und wobei der Spender (2) um die Schnappverbindung (11, 14) gedreht werden kann.

9. Verkleidung nach Anspruch 1, wobei der Spender (2) um etwa 180° gedreht werden kann.

## Revendications

1. Boîtier (1) pour un dispositif électronique mobile (17), le boîtier (1) comprenant un distributeur (2) qui comprend une unité de pulvérisation (3) et un réservoir, dans lequel le distributeur (2) peut être déplacé depuis une position de sécurité vers au moins une position de distribution,
**caractérisé en ce que** le distributeur (2) peut être pivoté depuis la position de sécurité vers la au moins une position de distribution, dans lequel le distributeur (2) peut être pivoté d'au moins 90°.

2. Boîtier selon la revendication 1, dans lequel le distributeur (2) est adapté pour être actionné mécaniquement et dans lequel l'unité de pulvérisation (3) peut de préférence être actionnée par pompage mécanique.

3. Boîtier selon l'une quelconque des revendications précédentes, dans lequel le distributeur (2) peut être libéré du et refixé au boîtier (1) et dans lequel le distributeur (2) est de préférence un distributeur autonome adapté pour être actionné lorsque libéré du boîtier (1).

4. Boîtier selon l'une quelconque des revendications précédentes, dans lequel le distributeur (2) et le boîtier (1) sont reliés de manière amovible l'un à l'autre par un encliquetage.

5. Boîtier selon l'une quelconque des revendications précédentes, dans lequel l'unité de pulvérisation (3) présente un élément de commande (3a) qui n'est pas accessible et/ou fermé dans la position de sécurité.

6. Boîtier selon l'une quelconque des revendications précédentes, dans lequel le distributeur (2) et/ou le boîtier (1) présente des moyens pour sécuriser et/ou fermer le distributeur (2) dans la position de sécurité.

7. Boîtier selon l'une quelconque des revendications précédentes, dans lequel le boîtier (1) et/ou distributeur (2) comprend un arrêt (12, 15) pour empêcher une rotation de plus d'un angle maximal prédéterminé.

8. Boîtier selon la revendication 1, dans lequel le distributeur (2) et le boîtier (1) peuvent être reliés de manière amovible l'un à l'autre par un encliquetage (11, 14) et dans lequel le distributeur (2) peut être pivoté autour dudit encliquetage (11, 14).

9. Boîtier selon la revendication 1, dans lequel le distributeur (2) peut être pivoté d'environ 180°.
